# EUROPEAN PATENT APPLICATION

(11) **EP 4 248 931 A2**
(43) Date of publication of application: **27.09.2023**
(21) Application number: 23020301.0
(22) Date of filing: 20.01.2020
(51) Int. Cl.: A61G 15/02

(54) **HEIGHT ADJUSTABLE ARMREST OF A MEDICAL CHAIR**

(30) Priority: 21.01.2019 CZ 20190032
(62) Divisional of application: 20705611.0
(71) Applicant: Borcad Medical A.S., 73945 Frycovice (CZ)
(72) Inventor: The designation of the inventor has not yet been filed

(57) **Abstract**

A medical chair with a height adjustable armrest comprised of a lifting mechanism and a base fixed to a bottom side of a lifting mechanism, a sitting part fixed to an upper side of the lifting mechanism and a backrest part fixed rotatably to the upper side of the lifting mechanism. An armrest comprises an armrest stop, wherein the armrest is rotatably fixed to the backrest part so that the armrest can be adjusted into an upper position and into a bottom position. New enhanced embodiment further comprises a latch system fixed rotatably to the backrest part and comprising a latch, a guide tube, a control element of the guide tube including a guiding pin, a horizontal axis of an armrest and a first stop of an armrest located on the horizontal axis of the armrest.

## Description

### Technical Field of Invention

The invention relates to medical chair area, and particularly, to a height adjustment of medical chair armrests.

### Background of the Invention

At present time, more and more patients consider some factors previously neglected as very important. These factors include, for example, comfort, easiness or therapeutic impact of the surrounding environment and also medical devices. Comfort of patients can be optimized by a height adjustable armrest of a medical chair. Fast and prompt adjusting of such armrest of the medical chair may minimize stress load of a patient, which is usually present during preparation for medical acts.

Japanese patent JP3613056 describes one of the options of present solutions for height adjustable armrests of medical chairs, wherein the height of the armrest is adjusted by a screw upon which an armrest stop bears.

Another known solution described in European patent EP2888974 consists of using two adjusting screws by which the armrest position is set to a required level. One of the adjusting screws is tightened and the other one is loosened when providing adjustment.

Disadvantages of the above-mentioned solutions for height adjustment of armrests are particularly insufficient simplicity and insufficient promptness to change the adjustment of the armrest. Height adjustment cannot be provided also without any accessory tool necessary to control the screw, which may potentially increase discomfort due to lack of space needed for working with such accessory tool. These undesired disadvantages are effectively solved by our previous patent CZ308228. This patent discloses very effective latch system for positioning and adjustment of an armrest. Despite, even such solution has disadvantages, particularly a control handle of this latch system which a caregiver or a patient may graze and cause spontaneous change of armrest position, or an armrest may fall over which is undesired with respect to safety of a patient leaning on the armrest.

The above stated reasons result in the fact that development of an easier and faster embodiment of height adjustment of armrests of medical chairs is desired and advisable.

### Summary of the Invention

The above-mentioned issues are solved by a medical chair with a height adjustable armrest comprised of a lifting mechanism and a base fixed to a bottom side of a lifting mechanism, a sitting part fixed to an upper side of the lifting mechanism and a backrest part fixed rotatably to the upper side of the lifting mechanism. An armrest comprises an armrest stop, wherein the armrest is rotatably fixed to the backrest part so that the armrest can be adjusted into an upper position and into a bottom position, same as disclosed in the previous patent US2022079829 of the applicant hereby incorporated by reference in its entirety. New enhanced embodiment further comprises a latch system fixed rotatably to the backrest part and comprising a latch, a guide tube, a control element of the guide tube including a guiding pin, a horizontal axis of an armrest and a first stop of an armrest located on the horizontal axis of the armrest. The latch system further comprises a second stop of the armrest located on an arm by which a horizontal axis of the armrest goes through. The latch system enables to set up the armrest into the basic functional horizontal position and the raised functional horizontal position. The latch is in the functional horizontal position located next to the first stop of the armrest on the horizontal axis and the second stop on the arm and both stops mutually touch each other. The latch moves between the first stop of the armrest on the horizontal axis and the second stop on the arm in the raised functional horizontal position.

Advantage of this solution is particularly easy structure and handling. The height of the armrest can be set up without necessary using of any accessory equipment and the individual positions can be set up fast using a control element of the guide tube, which is practically hidden and looks like a part of the horizontal axis of the armrest. In the preferred embodiment, a latch in the basic functional horizontal position bears on the edge of the first stop of the armrest. Advantage of this layout is higher firmness of the armrest and impossibility of accidental unlocking of the latch.

In another preferred embodiment, a latch is a part of a guide tube of a control element. The latch may have, preferably, a shape of a wedge having random size, or any suitable shape that will satisfy function of a latch. This embodiment enables easier handling of the latch system.

Preferably, the medical chair comprises an armrest and a horizontal axis of the armrest further comprising an arm and a coupler, wherein the horizontal axis of the armrest is coupled to a first stop of the armrest, and the horizontal axis of the armrest together with the first stop is rotatably attached to the arm as well as to the second stop on the arm, wherein both stops and the arm are rotatably attached to the backrest part of the medical chair. To the opposite end of the arm the coupler is rotatably attached, which is, at its opposite end, rotatably attached to the sitting part of the support deck frame. Advantage of this solution is that the position of the first stop of the armrest changes depending on position of the backrest part in relation to the sitting part.

In the preferred embodiment, the latch system comprises a control element of the guide tube with a latch, which has a shape of protrudent steel edge and is protected from safety reasons by rubber, however the control element can be produced from different material depending on material the guide tube with the latch is produced from. Preferably metal material may be used, as well as any other suitable material such as plastics, metal alloy or combination of metal alloys and plastic alloys. The control element of the guide tube with the latch moves slidingly along the horizontal axis of the armrest, wherein free and silent movement is provided by sliders located on the circumferences of the guide tube. Also movement and locking of the guide tube with the control element is provided by using a guiding pin, which goes through the side opening of the guide tube and which is fixed to the horizontal axis of the armrest to avoid falling the guide pin out of the axis, wherein simultaneously the guiding pin functions as a restriction element which determines how far the latch can be pulled out or inserted between the stops of the latch system. The opening for the guiding pin is as big as needed and is directly proportional to the size of the relevant guiding pin, and is such long to enclose movement between pulling out of the latch and inserting of the latch into the gap between the individual stops to lock the given position of the armrest.

In another embodiment, the latch system comprises an opening and a control element of a guide tube including a latch which forms a projection. The latch is in one position of the latch system located between stops of the latch system, and in another position the latch draws outside the stops of the latch system. Advantage of this solution is locking of the armrest in the desired position when setting of such position is faster and more precise.

Preferably, the latch system of the armrest comprises another non-functional position, wherein such position secures the armrest in the vertical position, it means the armrest is folded up so that a patient could get up from the medical chair and leave. This non-functional vertical position is provided using a third stop located on the horizontal axis of the armrest between the upper side of arm and the frame of the backrest part of the medical chair which the armrest is attached to. This third stop secures or locks the armrest in the vertical position after the armchair being folded up into the vertical position when the third stop seizes on the edge of the frame of the medical chair backrest part. The armrest is thus located in the vertical position relative to the backrest part so that a patient could leave the chair comfortably.

In the preferred embodiment, the armrest of the medical chair may be positioned into at least three positions, wherein first two positions are functional horizontal positions which serve as a support for upper limbs of a patient, and the third position is non-functional vertical position of the armrest, which serves for easier leaving the medical chair. A latch system is used for setting the individual positions comprising a latch, a control element, a guide tube, a first stop, a second stop, and a third stop. The entire latch system moves slidingly as well as rotatably along the horizontal axis of the armchair. Stops of the latch system are located on the horizontal axis of the armrest and at least two stops are in contact between each other or the latch, either directly or indirectly, according to armrest position. At least one stop is located on the horizontal axis of the armrest between upper arm and the frame of the backrest part. This stop secures the vertical position of the armrest so that a patient could leave the medical chair comfortably. An interlink may be located between upper arm and the third stop of the vertical position for easier handling with the armrest.

Preferably, all components of the latch system are metal, optionally can be produced from plastic materials, or metal alloys, or metal and plastic alloys.

### Brief Description of the Drawings

Subject matter of this application is disclosed and described in the detailed description of drawings, using the drawings as followed:
Fig. 1 shows schematic layout of a medical chair with and an armrest in non-functional vertical position.
Fig. 2 shows axonometric view of a part of a medical chair with an armrest in functional horizontal position.
Fig. 3 shows axonometric view of a latch system of an armrest.
Fig. 4 shows detailed view of a latch system of an armrest from a different visual angle.
Fig. 5 shows detailed view of a latch system in the first functional horizontal position.
Fig. 6 shows detailed bottom view of a latch system in the second functional horizontal position.

### Detailed Description of the Drawings

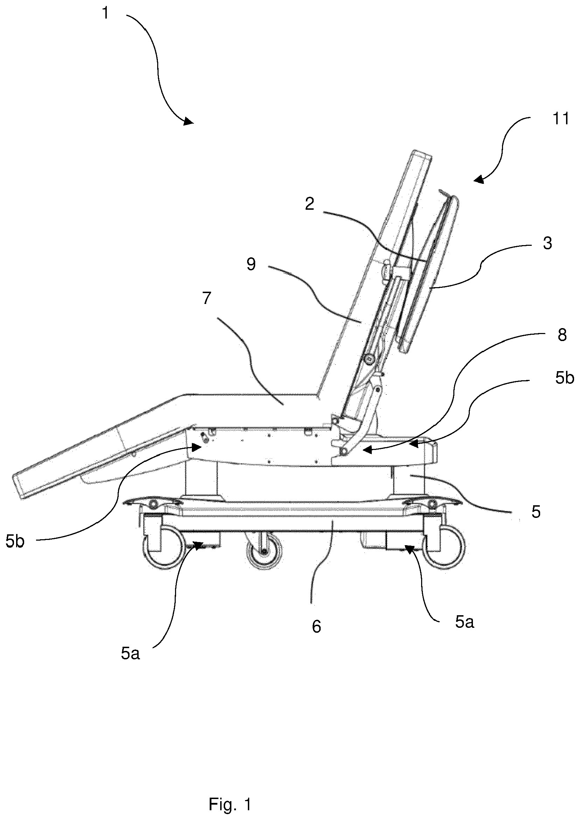

Medical chairs are used for many purposes such as infusion application, one day surgery and other different methods of examination of patients. Fig. 1 shows schematic layout of a medical chair 1 comprising an armrest 2 positioned in the non-functional vertical positon. The armrest 2 is a very important part of the medical chair 1 serving as a support of upper limbs of a patient. The medical chair 1 further comprises a backrest part 9, which is rotatably attached to a sitting part 7, so that the tilt of the backrest part 9 is adjustable. Height adjusting of the medical chair 1 is provided by a lifting mechanism 5, which is attached to a base 6 that may comprise wheel for easier handling with the medical chair 1. The armrest 2 of the medical chair is rotatably attached to the backrest part 9 and can be folded up to a non-functional vertical position 11 or dropped down into a functional horizontal position 12 (not shown) in which the armrest 2 may move from standard position into the raised position by means of a latch system 13 (not shown). The armrest 2 of the medical chair comprises a support 3 of a part of the armrest with a ball pivot 4 (not shown) which enables positioning of the support 3 of a part of the armrest into different angles and tilts to obtain bigger comfort of a patient.

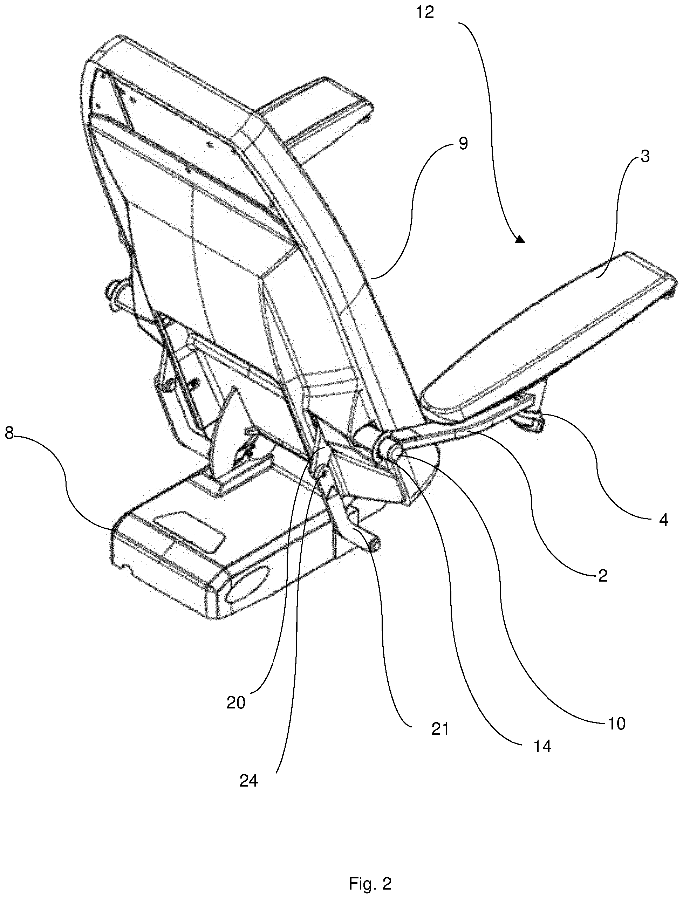

Fig. 2 shows an axonometric rear view of a part of a medical chair 1, where a backrest part 9 is positioned into the upright position and an armrest 2 together with a support 3 of a part of the armrest is positioned into a functional horizontal position 12, which may be a basic functional horizontal position 12a (not shown) and a raised functional horizontal position 12b (not shown). The Fig. 2 clearly shows that the support 3 of a part of the armrest is attached to the main part of the armrest 2 by using a ball pivot 4 for further positioning of the support 3 of a part of the armrest. In parallel, Fig. 2 shows that the armrest 2 is attached to a backrest part 9 by means of a horizontal axis 10 of an armrest on which a control element 14 of a latch system 13 (not shown) of the armrest is located. The latch system 13 (not shown) is hidden under the cover of the backrest part 9. Fig. 2 further shows an arm 20 and a coupler 21, wherein the arm 20 is coupled at its upper side 20a (not shown) with horizontal axis 10 of the armrest, and at its bottom side 20b (not shown) with a coupler 21 using a coupling pin 24. The coupler 21 is coupled at its bottom end with a positioning mechanism (not shown) of the backrest part 9.

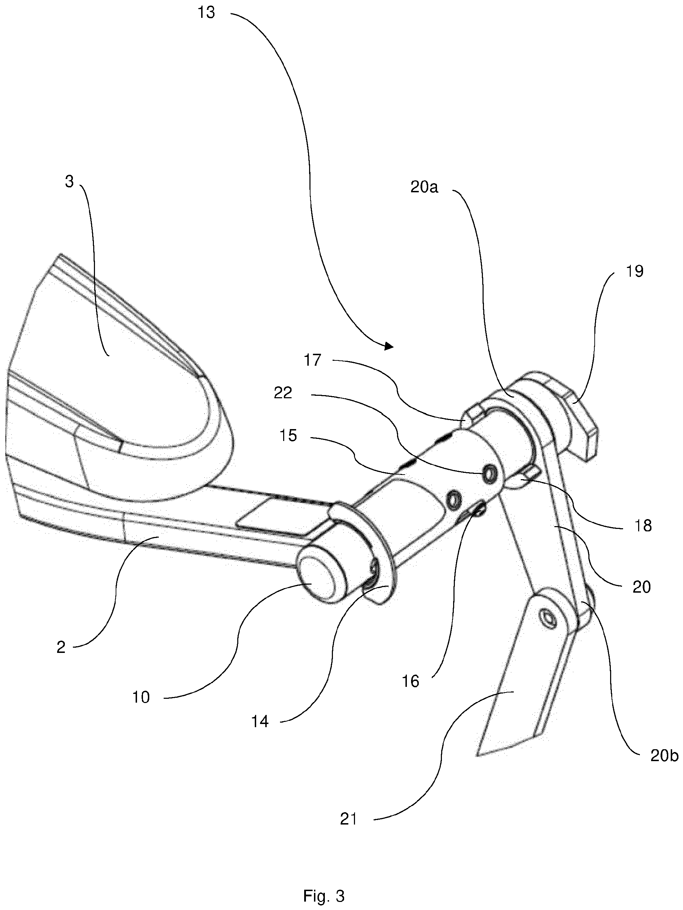

Fig. 3 shows axonometric view of a latch system 13 of the armrest 2. The latch system 13 of the armrest comprises a guide tube 15 further comprising a control element 14 at its one end and a latch 23 at another end (not shown herein) and being in contact with a first stop 17 of the armrest, which moves on the horizontal axis 10 of the armrest. Fig. 3 shows top view of the latch system 13, which comprises a control element 14, which is part of the guide tube 15 that moves slidingly along the horizontal axis 10 of the armrest. In the preferred embodiment, the control element 14 is a part of the guide tube 15. The guide tube 15 comprises at least one slider 22 at its perimeter for easy and smart moving along the horizontal axis 10 of the armrest. In another embodiment, more sliders 22 can be located on the guide tube 15, this particular figure shows four sliders 22. The guide tube 15 further comprises at an oval opening on at least one side which a guiding pin 16 goes through. This guiding pin 16 restricts movement of the guide tube 15 rotatably around the horizontal axis 10 of the armrest. Preferably, the oval opening for the guiding pin 16 is as long as being able to move and restrict movement of the guide tube 15 along the horizontal axis 10 and to control position of a latch 23 (not shown). Fig. 3 further shows a part of a first stop 17 of the armrest and a part of a second stop 18 on the arm 20, which are located under the horizontal axis 10 of the armrest close to upper side of the arm 20a. The arm 20 is coupled at its upper side 20a with the horizontal axis 10 of the armrest, and at its bottom side 20b with a coupler 21 by means of a coupling pin 24. The coupler 21 is coupled at its bottom end with a positioning mechanism (not shown) of the backrest part 9, which is attached to the frame 8 of the sitting part 7. A third stop 19 of the armrest is located behind the upper side of the arm 20a on one side in a point where on the opposite side the horizontal axis 10 of the armrest is attached rotatably and a first stop 17 and a second stop 18 are located. The third stop 19 enables tilting the armrest 2 over into a non-functional vertical position 11 (not shown). The third stop 19 is located on the horizontal axis 10 between the upper side of the arm 20a and the frame 8 of the backrest part 9 (not shown), where the armrest 2 is attached to the backrest part 9 (not shown). The third stop 19 secures the armrest 2 in the non-functional vertical position 11 (not shown).

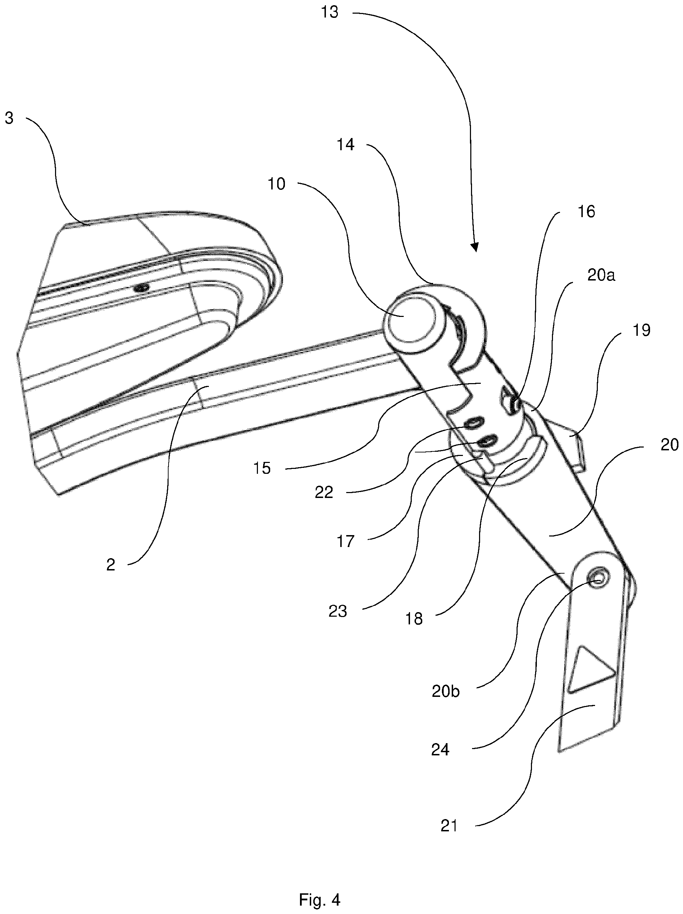

Fig. 4 shows detailed bottom view of a latch system 13 showing a support 3 of the part of the armrest and a horizontal axis 10 of the armrest, which is rotatably attached to a backrest part 9 of a medical chair 1 (not shown) at its opposite end. An armrest 2 is rotatably attached to an arm 20 at an upper side of the arm 20a, and at an opposite bottom side of the arm 20b the armrest 2 is rotatably attached to a coupler 21 of a frame 8 of a medical chair by means of a coupling pin 24. Fig. 4 shows the latch system 13 which comprises a control element 14, a guide tube 15, and a latch 23, which touches a side edge of a second stop 18 on the arm, which is in contact with a first stop 17 of the armrest. In this position the armrest 2 is in the basic functional horizontal position 12a. Both stops 17 and 18 are in contact with the upper side of the arm 20a, on the opposite side a third stop 19 is located which serves for tilting the armrest 2 into a non-functional vertical position 11 (not shown). In the preferred embodiment a restriction element in the form of an adaptor (not shown) is located on the side edge of the upper side of the arm 20a to which the third stop 19 bears on and due to which the armrest 2 can be secured in the non-functional vertical position 11. The third stop 19 is located on the horizontal axis 10 of the armrest in the point where this horizontal axis 10 of the armrest is coupled with the frame 8 of the backrest part 9, where a stop (not shown) formed by an edge of the frame 8 of the backrest part 9 restricts position of the third stop 19 of the latch system 13 by which a non-functional vertical position 11 of the armrest 2 is fixed and secured.

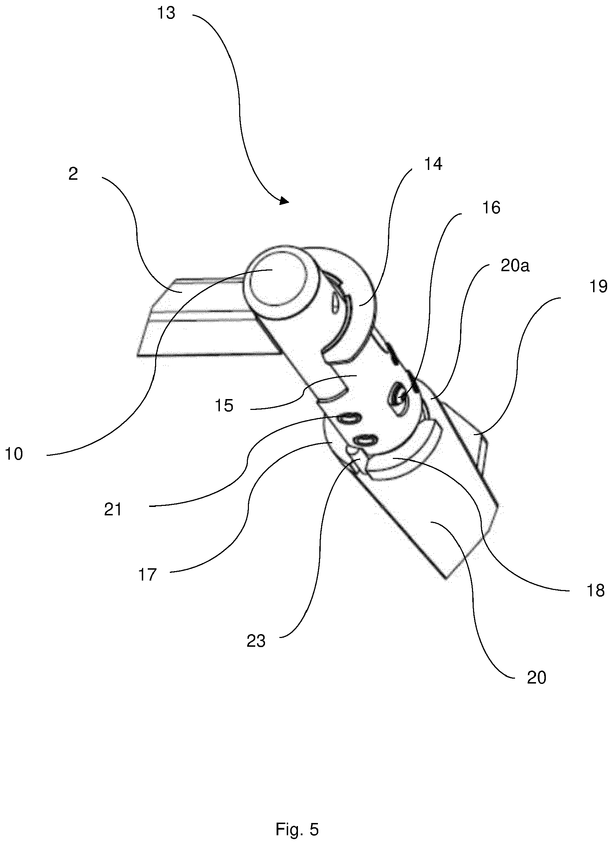

Fig. 5 shows a latch system 13 in a raised functional horizontal position 12b comprising a latch 23 located between a first stop 17 of the armrest and a second stop 18 on the arm. Fig. 5 shows a part of the armrest 2 and a horizontal axis 10 of the armrest, which is rotatably coupled with a frame 8 of a backrest part 9. The latch system 13 is located on the horizontal axis 10 of the armrest and comprises a control element 14, which is a part of a guide tube 15, a latch 23, which moves slidingly along the horizontal axis 10 of the armrest toward or backward the frame 8 of the backrest part 9 using a guiding pin 16, by which a guide tube 15 is fixed via an oval opening of the guide tube 15 to the horizontal axis 10 of the armrest, due to which a position of the latch 23 can be controlled in the individual functional horizontal positions 12 of the armrest.

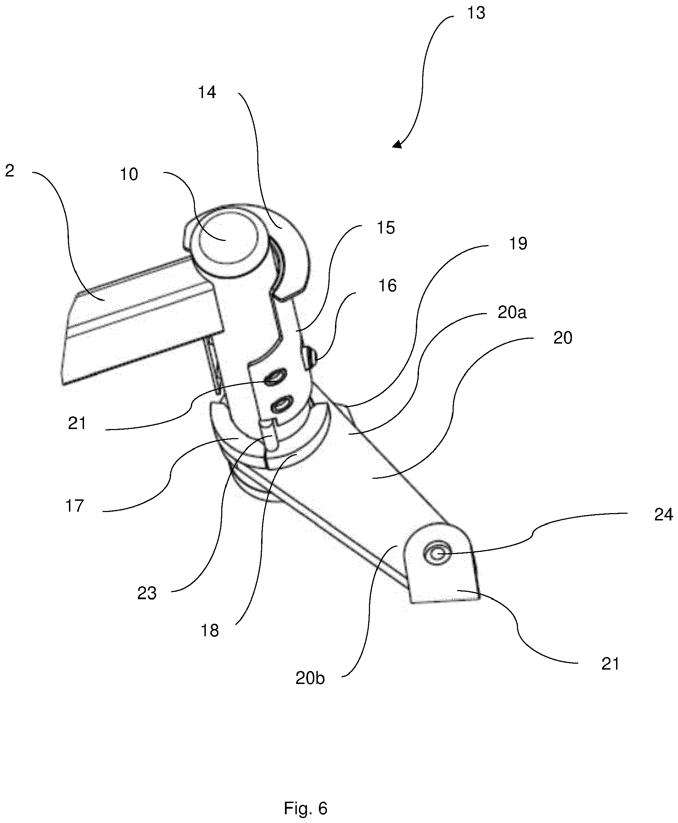

Fig. 6 shows axonometric bottom view of a latch system 13 of the armchair 2 where an armchair 2 is shown in a basic functional horizontal position 12a, where a latch 23 is not located between a first stop 17 of the armrest and a second stop 18 on the arm. In this case both stops 17 and 18 of the latch system 13 are in contact with their edges. In this embodiment the first stop 17 of the armrest is located on the horizontal axis 10 of the armrest and the second stop 18 on the arm is a part of upper side of the arm 20a and both stops 17 and 18 copy rotatable movement around the horizontal axis 10 of the armrest, which is fixed to a frame 8 of the backrest part 9. A control element 14 together with a guide tube 15 of a latch 23 moves along the horizontal axis 10 of the armrest. The control element 14 enables a patient or caregiver to move the latch 23 side to side. This movement is restricted by means of an oval opening, which a guiding pin 16 goes through and by which the guide tube 15 is fixed, and in parallel, also enables movement along the horizontal axis 10. This movement is as big as the latch 23 could be pushed in between the first stop 17 of the armrest and the second stop 18 on the arm or otherwise, the latch 23 could pull out and enable mutual contact of the first stop 17 of the armrest and the second stop 18 on the arm, by which the basic functional horizontal position 12a changes to a raised functional horizontal position 12b.

### List of reference Signs

1 - medical chair
2 - armrest
3 - support of a part of the armrest
4 - ball pivot
5 - lifting mechanism
   5a - bottom side of the lifting mechanism
   5b - upper side of the lifting mechanism
6 - base
7 - sitting part
8 - frame
9 - backrest part
10 - horizontal axis of an armrest
11 - non-functional vertical position (of an armrest)
12 - functional horizontal position (of an armrest)
   12a - basic functional horizontal position
   12b - raised functional horizontal position
13 - latch system
14 - control element
15 - guide tube
16 - guiding pin
17 - first stop of an armrest
18 - second stop of an armrest
19 - third stop of an armrest 20- arm
   20a - upper side of the arm
   20b - bottom side of the arm
21 - coupler
22 - slider
23 - latch
24 - coupling pin

## Claims

1. A medical chair with height adjustable armrest (1) comprising a lifting mechanism (5), a base (6) coupled to a bottom side of the lifting mechanism (5a), a backrest part (9) coupled to a upper side of the lifting mechanism (5b) rotatably, and an armrest (2) rotatably coupled to the backrest part (9) and adjustable to at least one position, such armrest comprising a support of a part of the armrest (3), a horizontal axis (10) of an armrest **characterized in that** the armrest (2) further comprising a latch system (13) moving slidingly on the horizontal axis (10) of the armrest or rotatably around the horizontal axis (10) of the armrest, wherein the latch system (13) comprises a latch (23) coupled to a control element (14) and a guide tube (15), which is slidingly coupled to the horizontal axis (10) of the armrest by a guiding pin (16), wherein the latch system (13) further comprises a first stop (17) of the armrest and a second stop (18) on one side of an arm (20) and a third stop (19) on the horizontal axis (10) of the armrest, wherein the third stop (19) is located on the horizontal axis (10) of the armrest between an upper side of the arm (20a) and a frame (8) of the backrest part (9).

2. The medical chair with height adjustable armrest (1) according to claim 1 **characterized in that** the latch (23) being in a basic functional horizontal position (12a) of the armrest bears sideward on mutually touching first stop (17) of the armrest and the second stop (18) on the arm (20).

3. The medical chair with height adjustable armrest (1) according to claim 1 **characterized in that** the latch (23) being in a raised functional horizontal position (12b) of the armrest is located between the first stop (17) of the armrest and the second stop (18) on the arm (20).

4. The medical chair with height adjustable armrest (1) according to claim 1 **characterized in that** the latch (23) is a part of the guide tube (15) as well as the control element (14).

5. The medical chair with height adjustable armrest (1) according to claim 1 **characterized in that** the control element (14), the guide tube (15) and the latch (23) move slidingly along the horizontal axis (10) of the armrest.

6. The medical chair with height adjustable armrest (1) according to claim 1 **characterized in that** a non-functional vertical position (11) comprises the third stop (19) of the armrest located on the horizontal axis (10) of the armrest between the frame (8) and the backrest part (9), whose further movement is restricted by a projection on the frame (8) of the backrest part (9).

7. The medical chair with height adjustable armrest (1) according to claim 1 **characterized in that** at least one position of the armrest (2) is secured by at least one or two stops of the latch system (13).

8. The medical chair with height adjustable armrest (1) according to claim 1 **characterized in that** the latch system (13) comprises the control element (14), the guide tube (15) and the latch (23), wherein the guide tube (15) is coupled to the horizontal axis (10) of the armrest slidingly by the guiding pin (16).

9. The medical chair with height adjustable armrest (1) according to claim 1 **characterized in that** the latch system (13) comprises the guide tube (15) further comprising an oval opening for a guiding pin (16) and sliders (22).
